Europäisches Patentamt

European Patent Office

Office européen des brevets

(19)

(11) Publication number: **0 581 510 A1**

## EUROPEAN PATENT APPLICATION

(21) Application number: **93305673.1**

(22) Date of filing: **19.07.93**

(51) Int. Cl.5: **C08J 9/40**

(30) Priority: **20.07.92 JP 214614/92**

(43) Date of publication of application:
**02.02.94 Bulletin 94/05**

(84) Designated Contracting States:
**DE FR GB IT SE**

(71) Applicant: **JAPAN GORE-TEX, INC.**
**42-5, 1-chome**
**Akazutsumi**
**Setagaya-ku Tokyo 156(JP)**

(72) Inventor: **Kobayashi, Masayuki**
**713-1-505, Tsudaka**
**Okayama-shi, Okayama-ken 701-11(JP)**
Inventor: **Oga, Takahiro**
**897-5, Nishigori,**
**Yamate-Son**
**Tsukubo-Gun, Okayama-Ken 719-11(JP)**

(74) Representative: **McCallum, William Potter et al**
**Cruikshank & Fairweather**
**19 Royal Exchange Square**
**Glasgow G1 3AE Scotland (GB)**

(54) A porous composite material and process of manufacture therefor.

(57) A porous composite material consisting of a porous synthetic polymer matrix material having its internal surfaces coated with a metal-oxide gel is provided. The material has hydrophilic properties and is useful for filtration and for immobilizing bioactive substances.

EP 0 581 510 A1

This invention relates to porous materials for use in filtration or for immobilizing bioactive substances. More specifically, the invention relates to porous materials of synthetic polymers having internal surfaces coated with a metal oxide.

The use of porous articles of synthetic polymers in filtration applications, or as carriers and supports for immobilizing bioactive substances is known in the art. In some cases the nature of the synthetic polymer from which a porous article is formed prevents use of the article in applications in which the structure, strength, flexibility, fabricability, and cost, etc., of the article would otherwise be very desirable. In these instances it becomes desirable to modify the article so that it can be used in the application. An example of such a modification would be to alter a porous article made of a fluoropolymer, which is hydrophobic, so that it becomes hydrophilic and can be used in water or other aqueous liquid systems. Another example would be to alter a porous article of synthetic polymer to provide more favorable surfaces for adsorption or attachment of bioactive substances.

Methods in which metal oxides are introduced into porous articles to alter the performance characteristics of the articles are known in the art. One such method is to impregnate the porous article with a suspension of fine metal-oxide particles, and then dry the article to remove the suspending fluid. A drawback to this method is that the particles are not strongly bonded to the porous article and have a tendency to fall off, or be washed out.

Another method is to impregnate a porous article with a solution of a metal oxide precursor, and convert the precursor to form the metal oxide by physical or chemical means. An example of this method if to impregnate a porous article, or coat the surface of a porous article, with a solution containing a hydrolyzable zirconium oxide or titanium oxide precursor, after which the metal oxide is formed in place by a hydrolysis reaction. A drawback to this method is that frequently a large quantity of excess particles are produced that are not firmly attached to the porous article and, without further treatment such as calcining or sintering at temperatures in excess of 600°C, are prone to the same problems described above. In the cases in which the precursor has been impregnated into the porous structure and then reacted, the excess particles significantly reduce the pore volume and pore size of the article, consequently permeability to fluids is reduced.

Another method of forming a metal oxide on a porous article is to use a metal deposition technique, for example, vapor deposition, electrochemical deposition, and the like, and then oxidize the metal. These methods are somewhat limited by availability of metals or metal plating solutions, and by process limitations which make uniform coating of internal surfaces very difficult.

According to the present invention there is provided a porous composite material comprising
(i) a porous matrix material of synthetic polymer; and
(ii) a coating material of a metal-oxide gel;
whereby the internal surfaces of said porous matrix are coated with a coating of said metal-oxide gel such that the pore volume of the composite material is equal to 50 percent or more of the initial pore volume of said porous matrix material.

The invention provides a porous composite material comprising a porous matrix material of synthetic polymer having its internal surfaces coated with a metal oxide. The metal-oxide coating on the internal surfaces is sufficiently thin that the pore volume of the porous composite material is preferably in the range 50 to 98 percent of the initial uncoated pore volume of the porous synthetic polymer matrix material. The metal-oxide coating provides a hydrophilic surface which is readily wetted by water and other aqueous fluids, and further provides a surface on which bioactive substances can be adsorbed, or otherwise attached or immobilized.

According to a further aspect of the present invention, there is provided a process for making a porous composite material comprising the steps of:
(a) reacting a metal-oxide precursor of a metal-containing organic compound with a water-containing liquid to obtain a solution containing a partially-gelled metal-oxide precursor;
(b) impregnating a porous synthetic polymer matrix material with said solution containing said partially-gelled metal-oxide precursor;
(c) further reacting said partially-gelled metal-oxide precursor to obtain a fully-gelled hydrous metal-oxide gel;
(d) drying said porous matrix containing said hydrous metal-oxide gel at a temperature of 300°C or lower;
thus producing a porous composite material comprising a porous synthetic polymer matrix having internal surfaces coated with a metal-oxide. The metal-oxide forms a thin, continuous, stable coating on the internal surfaces of the porous synthetic polymer matrix which does not easily come off, and furthermore, is present in such small quantity that the porous composite material retains most of the void content of the uncoated porous synthetic polymer matrix material.

By porous material as used herein is meant to indicate a material having interconnected voids or pores such that a continuous passage for fluids from one side of the material to the other side is provided through them.

Embodiments of the present invention will now be described, by way of example:-

The metal-oxide precursor to make the material of the invention must be a hydrolyzable metal-containing organic metal compound such as metal alkoxides and metal complexes. Example of metals which form suitable metal compounds or complexes include lithium, beryllium, boron, carbon, sodium, magnesium, aluminum, silicon, phosporus, sulfur, potassium, calcium, cesium, titanium, vanadium, chromium, manganese, iron, cobalt, nickel, copper, zinc, gallium, germanium, arsenic, selenium, rubidium, strontium, yttrium, Zirconium, niobium, molybdenum, ruthenium, rhodium, palladium, cadmium, indium, tin, antimony, tellurium, cesium, barium, lanthanum, cerium, praseodymium, neodymium, promethium, samarium, europium, gadolinium, terbium, dysprosium, holmium, erbium, thulium, ytterbium, lutetium, thorium, protactinium, uranium, plutonium, hafnium, tantalum, tungsten, platinum, mercury, titanium, lead, bismuth, and the like. Examples of metal alkoxides include tetramethoxytitanium, tetraethoxytitanium, tetraisopropoxytitanium, tetrabutoxytitanium, zirconium isopropylate, zirconium butylate, tetramethoxysilane, tetraethoxysilane, tetraisopropoxysilane, and tetratertiarybutoxysilane. Silicon alkoxides, such as tetraoxysilane, are particularly suitable for use in the present invention.

In order to make the material of the invention, the metal-oxide precursor is reacted by contact with water to yield a partially gelled precursor in a solution. Such gelling reactions, or gelation reactions, are well known in the art, and include hydrolysis and condensation polymerisation reactions.

In order to bring about partial gelling of the metal-oxide precursor, the metal-oxide precursor is added to water, or a water-containing solution, stirred, and mixed. An organic solvent miscible in water, for example, alcohols such as methanol, ethanol, propanol, or butanol, may be mixed with the water. Also, acids such as hydrochloric acid, sulfuric acid, nitric acid, acetic acid, or hydrofluoric acid; or bases such as sodium hydroxide, potassium hydroxide, or ammonia, may be added as necessary. The partial-gelling reaction may also be brought about by adding a solution of the metal-oxide precursor in an organic solvent to water, stirring, and mixing it. In this case the organic solvent may be any solvent which is capable of dissolving the the metal-oxide precursor; in addition to alcohols, aliphatic or aromatic hydrocarbons may be used.

The partial-gelling reaction is generally conducted at a temperature of 0 to 100°C, preferably 60 to 80°C. The proportion of water used is in the range 0.1 to 100 moles, preferably in the range 1 to 10 moles, to one mole of the metal-oxide precursor. Preferably, the reaction is conducted in a closed container or under an inert gas flow; however, it is possible to conduct the reaction in an open container using ambient atmospheric moisture.

The solution containing the partially-gelled metal-oxide precursor is then impregnated into a porous matrix material of synthetic polymer. Any method of impregnation by which the solution fills the internal cavities and covers the surface of the porous matrix material may be used. For example, the solution may be applied to the porous matrix material by conventional methods such as immersion, spraying, roll-coating, or other techniques well known in the art.

Following impregnation of the solution containing the partially-gelled metal-oxide precursor into the porous synthetic polymer matrix, the partially-gelled metal-oxide precursor is brought into contact with an excess of water so that the gelling reaction proceeds further and a completely-gelled hydrous metal-oxide gel in solid form is obtained. This is preferably accomplished by immersing the porous synthetic polymer matrix material containing the partially-gelled metal-oxide precursor in water; however, a method wherein a water mist is applied by spraying or the like, or a method in which steam vapor is applied may also be used. The water applied to complete the gelling reaction may also contain an acid or alkali in order to accelerate the reaction.

When the gelling reaction is complete, the hydrous metal-oxide gel forms a film on the internal surfaces of the porous matrix material, and by drying this at a temperature of 300°C or lower, preferably 200°C or lower, a thin metal-oxide layer which adheres uniformly to the internal surfaces of the porous matrix material is obtained. The thickness of this metal-oxide layer should be in the range 0.01 to 0.2 micrometers, preferably in the range 0.02 to 0.1 micrometers. The metal-oxide layer, when formed in the manner described above, is a continuous, single film which has exceptional adhesion and is difficult to peel or separate from the internal surfaces of the porous matrix material. The porous composite material of the invention thus formed has a high pore volume, maintaining 50 percent or more, preferably 70 percent or more, of the pore volume of the uncoated porous matrix material.

The porous matrix material of synthetic polymer may be selected from among a variety of synthetic polymer materials. Examples of suitable materials include polyolefin, such as polyethylene, polypropylene, or ethylene/propylene copolymer; polystyrene, polyamide, polysulfone, polyimide, polycarbonate, polyacrylonitrile, polyvinyl chloride, silicone rubber, and fluoropolymer. Fluoropolymers, such as polytetrafluoroethylene, polychlorotrifluoroethylene, tetrafluoroethylene/(perfluoroalkyl) vinyl ether copolymer, tetrafluoroethylene/hexafluoropropylene copolymer, and the like, are desirable from the standpoint of heat resistance and chemical resistance, and are preferred.

Porous articles, such as film, sheet, plate, tubing, hollow fibers, and the like, can be formed from the above synthetic polymers by foaming, papermaking, stretching, expansion, or other techniques known in the art, and can be used as the porous matrix material of the invention. Such porous articles suitable for use as the porous matrix material are commercially available from many sources. The nominal mean pore diameter of the porous matrix material of the invention should be in the range 0.01 to 15 micrometers, preferably in the range 0.05 to 10 micrometers. The pore volume of the porous matrix material should be in the range 20 to 95 percent, preferably in the range 30 to 90 percent.

The porous composite material of the invention has a combination of the properties associated with its components. For example, strength, flexibility, pore size, pore volume, heat resistance, etc. of the composite are generally associated with the porous matrix material. On the other hand, the uniform, thin coating of metal oxide on the internal and external surfaces of the porous matrix material contributes functions uniquely associated with this component. For example, when the porous matrix material is formed from a hydrophobic synthetic polymer such as a fluoropolymer, hydrophilic properties are conferred by the metal-oxide coating. If the porous matrix material consists of a relatively hydrophilic polymer, such as a polyamide or a polyester, the hydrophilic properties are improved; thus, the porous composite material of the invention is useful as a filter in a water-based system, a carrier for immobilization of bioactive substances, and the like. When the porous matrix material consists of a fluoropolymer, the porous composite material has exceptional heat resistance in addition to hydrophilic properties and will withstand steam sterilization operations, and thus is useful as a material in biochemical and medical applications. Also, due to the uniform coating of metal-oxide on the internal and external surfaces, exceptional dimensional stability is imparted to flexible porous matrix materials having high pore volumes, thus there is little change in size when the composite material is wetted in a solvent and dried without restraint.

TEST PROCEDURES

Water Flow Test (WFT)

A test sample is mounted in a filter holder providing a test area of 9.62 cm$^2$. Water is flowed through the sample at an applied pressure of 60 cm of Mercury. The time for 200 milliliters of water to flow through the sample is measured and reported.

Methanol Flow Test (MFT]

A test sample is mounted in a filter holder providing a test area of 9.62 cm$^2$. Methanol is flowed through the sample at an applied pressure of 60 cm of Mercury. The time for 200 milliliters of methanol to flow through the sample is measured and reported.

Pore Volume Calculations

The pore volumes of porous matrix materials of known specific gravity are determined from density measurements of the materials, for example, for porous polytetrafluoroethylene

Pore Volume (%) = [(2.2 - bulk density of the sample) / 2.2] x 100

The pore volume of porous composite materials of unknown specific gravity was determined as follows:
The porous composite material was impregnated with water, the excess water wiped off the surface, and the water-filled material weighed. The following computational formula was used to calculate the pore volume.

Pore Volume (%) = [(water-filled weight - dry weight) / apparent volume] x 100

4

## Example 1

A metal-oxide precursor solution was prepared, and the metal-oxide precursor was partially gelled by reacting a mixture of 100 parts tetraethoxysilane (supplied by Shinetsu Silicon Co.), 52 parts water, and 133 parts ethanol. The reaction was conducted using a pipe containing calcium chloride under reflux to prevent introduction of moisture from the ambient atmosphere into the reaction vessel. The reaction was conducted at a temperature of about 80°C for 24 hours. A solution containing the partially-gelled metal-oxide precursor was obtained.

A porous film of expanded polytetrafluoroethylene (manufactured by Japan Goretex, Inc.) having a thickness of 40 micrometers, a nominal pore diameter of 0.5 micrometers, and a pore volume of 80 percent was used as a porous matrix material. The porous polytetrafluoroethylene matrix material was impregnated with the solution containing the partially-gelled metal-oxide precursor, after which the impregnated matrix material was immersed in hot water at a temperature of about 60°C for 5 hours to completely gel the metal-oxide precursor. The impregnated matrix material containing the fully-gelled metal-oxide precursor was then dried at a temperature of about 150°C for 30 minutes. The surfaces of the porous polytetrafluoroethylene matrix material, including the internal surfaces, were covered with a silica gel, and the porous composite material of the invention was obtained.

Pore volume measurements were made on the porous composite material and a sample was subjected to the Water Flow Test and Methanol Flow Test as described above. The sample was given 10 successive Water Flow Tests. Test results and measurements are shown below.

| Item | | Before treatment | After treatment |
|------|---|------|------|
| Pore Volume (%) | | 80 | 66.6 |
| Pore Volume retained (%) | | -- | 83.3 |
| Hydrophilic Properties | | None | Good |
| Water Flow (sec) | -1st | -- | 21.5 |
| | -10th | -- | 22.0 |
| Methanol Flow (sec) | | 17 | 21.4 |

The porous composite material had a high pore volume which was more than 80 percent of the pore volume of untreated porous matrix material. The material had satisfactory hydrophilic properties, and the metal-oxide adhered firmly, so that even after the 10th WFT measurement the water flow rate had not decreased.

## Example 2

A metal-oxide precursor solution was prepared, and the metal-oxide precursor was partially gelled by reacting a mixture of 100 parts tetraethoxysilane (supplied by Shinetsu Silicon Co.), 71 parts water, and 126 parts ethanol. The reaction was conducted using a pipe containing calcium chloride under reflux to prevent introduction of moisture from the ambient atmosphere into the reaction vessel. The reaction was conducted at a temperature of about 80°C for 24 hours. A solution containing the partially-gelled metal-oxide precursor was obtained.

A porous film of expanded polytetrafluoroethylene (manufactured by Japan Goretex, Inc.) having a thickness of 40 micrometers, a nominal pore diameter of 0.5 micrometers, and a pore volume of 80 percent was used as a porous matrix material. The porous polytetrafluoroethylene matrix material was impregnated with the solution containing the partially-gelled metal-oxide precursor, after which the impregnated matrix material was immersed in hot water at a temperature of about 60°C for 5 hours to completely gel the metal-oxide precursor. The impregnated matrix material containing the fully-gelled metal-oxide precursor was then dried at a temperature of about 150°C for 30 minutes. The surfaces of the porous polytetrafluoroethylene matrix material, including the internal surfaces, were covered with a silica gel, and the porous composite material of the invention was obtained.

Pore volume measurements were made on the porous composite material and a sample was subjected to the Water Flow Test and Methanol Flow Test as described above. The sample was given 10 successive Water Flow Tests. Test results and measurements are shown below.

5

| Item | | Before treatment | After treatment |
|---|---|---|---|
| Pore Volume (%) | | 80 | 68.0 |
| Pore Volume retained (%) | | -- | 85.0 |
| Hydrophilic Properties | | None | Good |
| Water Flow (sec) | -1st | -- | 21.0 |
| | -10th | -- | 21.5 |
| Methanol Flow (sec) | | 17 | 20.5 |

The porous composite material had a high pore volume which was more than 80 percent of the pore volume of untreated porous matrix material. The material had satisfactory hydrophilic properties, and the metal-oxide adhered firmly, so that even after the 10th WFT measurement the water flow rate had not decreased.

Comparative Example 1

A porous polytetrafluoroethylene film identical to that of Example 1 was impregnated with tetraethoxysilane. The tetraethoxysilane was not partially gelled before impregnation, but was otherwise prepared, measured, and tested as described in Example 1, except that only one water flow test was made. The metal-oxide did not form a composite with the porous polytetrafluoroethylene matrix material, and thus hydrophilic properties were not conferred.

| Item | | Before treatment | After treatment |
|---|---|---|---|
| Pore Volume (%) | | 80 | 80.0 |
| Pore Volume retained (%) | | -- | 100 |
| Hydrophilic Properties | | None | None |
| Water Flow (sec) | -1st | -- | Not measurable |
| | 10th | -- | -- |
| Methanol Flow (sec) | | 17 | 17 |

Comparative Example 2

A porous polytetrafluoroethylene film identical to that of Example 1 was impregnated with zirconium tetraisopropoxide (manufactured by Matsumoto Chemical Industries). The zirconium tetraisopropoxide was not partially gelled before impregnation, but was otherwise prepared, measured, and tested as described in Example 1. The zirconium tetraisopropoxide was also diluted with a solvent of ethanol or the like in an attempt to reduce the amount of adhering metal-oxide, but this produced irregularities in the hydrophilic properties. As indicated below, the resulting porous composite material showed a large decline in pore volume and the water and methanol flow rates were poor in comparison with Examples 1 and 2.

| Item | | Before treatment | After treatment |
|---|---|---|---|
| Pore Volume (%) | | 80 | 49.6 |
| Pore Volume retained (%) | | -- | 62.0 |
| Hydrophilic Properties | | None | Yes |
| Water Flow (sec) | -1st | -- | 34.2 |
| | 10th | -- | 51.0 |
| Methanol Flow (sec) | | 17 | 35.0 |

Comparative Example 3

A porous polytetrafluoroethylene film identical to that of Example 1 was impregnated with titanium tetraisopropoxide (manufactured by Matsumoto Chemical Industries). The titanium tetraisopropoxide was not partially gelled before impregnation, but was otherwise prepared, measured, and tested as described in Example 1, except that only one water flow test was made. The titanium tetraisopropoxide was also diluted with a solvent of ethanol or the like in an attempt to reduce the amount of adhering metal-oxide, but this produced irregularities In the hydrophilic properties. As indicated below, the resulting porous composite material showed a large decline in pore volume and the water and methanol flow rates were poor in comparison with Examples 1 and 2.

| Item | Before treatment | After treatment |
|---|---|---|
| Pore Volume (%) | 80 | 38.5 |
| Pore Volume retained (%) | -- | 48.1 |
| Hydrophilic Properties | None | Yes |
| Water Flow (sec) -1st | -- | 195 |
| Methanol flow (sec) | 17 | 191 |

**Claims**

1. A porous composite material comprising
    (i) a porous matrix material of synthetic polymer; and
    (ii) a coating material of a metal-oxide gel;
    whereby the internal surfaces of said porous matrix are coated with a coating of said metal-oxide gel such that the pore volume of the composite material is equal to 50 percent or more of the initial pore volume of said porous matrix material.

2. A porous composite material as claimed in Claim 1, wherein the coating material comprises a dried product of a hydrous metal-oxide gel formed by the gelling of a hydrolyzable, metal-containing organic compound.

3. A porous composite material as claimed in Claim 1 or 2, wherein the metal-oxide gel is silica gel.

4. A porous composite material as claimed in any of Claims 1 to 3, wherein the porous matrix material is a synthetic polymer selected from polyolefin, polystyrene, polyamide, polysulfone, polyimide, polycarbonate, polyacrylonitrile, polyvinyl chloride, silicone rubber or fluoropolymer.

5. A porous composite material as claimed in Claim 4 wherein the porous matrix material is polytetrafluoroethylene.

6. A porous composite material as claimed in Claim 5, wherein the porous matrix material is expanded polytetrafluoroethylene.

7. A process for making a porous composite material comprising the steps of:
    (a) reacting a metal-oxide precursor of a metal-containing organic compound with a water-containing liquid to obtain a solution containing a partially-gelled metal-oxide precursor;
    (b) impregnating a porous synthetic polymer matrix material with said solution containing said partially-gelled metal-oxide precursor;
    (c) further reacting said partially-gelled metal-oxide precursor to obtain a fully-gelled hydrous metal-oxide gel;
    (d) drying said porous matrix containing said hydrous metal-oxide gel at a temperature of 300°C or lower;
    thus producing a porous composite material comprising a porous synthetic polymer matrix having internal surfaces coated with a metal-oxide.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | CHEMICAL ABSTRACTS, vol. 109, no. 2 Columbus, Ohio, US; abstract no. 7717s, AOKI MIKIO 'heat resistant porous materials' * abstract * & JP-A-63 030 542 (SEIKO EPSON CORP. JAPAN) 9 February 1988 * PAJ abstract * | 7 | C08J9/40 |
| A | EP-A-0 406 651 (IRBIT) * column 5, line 15 - line 45; example 1 * * claims 1-17 * | 1-4,7 | |
| A | GB-A-981 505 (WILSON) * page 3, line 77 - line 110 * * claims 1-3 * | 1-4,7 | |
| A | EP-A-0 049 365 (DYNAMIT NOBEL A.G.) * page 6, line 25 - page 7, line 4; example 1 * * page 11, line 19 - line 35; example 6 * * claims 1-4,7 * | 1-4,7 | TECHNICAL FIELDS SEARCHED (Int. Cl.5) C08J |

-----

The present search report has been drawn up for all claims

| Place of search | Date of completion of the search | Examiner |
|---|---|---|
| THE HAGUE | 03 SEPTEMBER 1993 | OUDOT R. |

EPO FORM 1503 03.82 (P0401)